# EUROPEAN PATENT SPECIFICATION

(11) **EP 3 560 868 B1**
(45) Date of publication and mention of the grant of the patent: **16.12.2020**
(21) Application number: 18382283.2
(22) Date of filing: 26.04.2018
(51) Int. Cl.: B65H 49/16, D02H 1/00, F16B 7/18, F16B 21/09

(54) **STRUCTURES**
STRUKTUREN
STRUCTURES

(43) Date of publication of application: 30.10.2019
(73) Proprietor: Galan Textile Machinery, S.L., 08225 Terrassa, Barcelona (ES)
(72) Inventor: Villarreal Rodriguez, David, 08225 TERRASSA (ES); Barroso Ortiz, David, 08225 TERRASSA (ES)
(74) Representative: ZBM Patents - Zea, Barlocci & Markvardsen

(56) References cited:
- EP-A2- 1 174 022
- EP-A2- 2 853 502
- WO-A1-2007/115598
- DE-T2- 60 019 973
- JP-A- H1 037 922
- US-A1- 2002 090 256
- US-A1- 2005 191 121
- US-A1- 2015 056 003

## Description

The present disclosure relates to structures, in particular to structures comprising struts. The present disclosure further relates to creels to support yarn packages comprising a frame structure which comprises struts.

### BACKGROUND

Creels to support yarn packages are commonly used with, *inter alia*, twisting machinery. This machinery is fed with yarn which is usually provided in yarn packages. Apart from supporting the yarn packages, creels are used to hold auxiliary devices for feeding yarn from the packages to the machinery, such as yarn tensioners, yarn guides, yarn breaking detectors, or the like.

Creels are usually formed from supporting members and more particularly, an array of horizontal and vertical members. These supporting members may be hollow bars or the like.

There are some examples of known structures for obtaining creels. One example consists in structures made from tubes joined through mounting clamps. This example faces some drawbacks such as a cumbersome assembling in which many parts are involved and various people are required to build the structure. Furthermore, the assembling is also significantly time-consuming.

A further example is embodied by creels with structures made from welded tubes. This solution requires qualified mounting staff for mounting the structures and a remarkable workload for welding the tubes to each other. Furthermore, this type of creel must be sent to the customer fully assembled and this means a bulky shipping.

Therefore, the existing solutions are not envisaged to be implemented by a single worker without remarkable skills. The known solutions are also significantly time-consuming and are not convenient to be implemented.

It is an object of the present disclosure to provide examples of structures and creels that avoid or at least reduce one or more of the afore-mentioned drawbacks.

Documents such as DE60019973T2 and WO2007115598A1 disclose examples of structures.

### SUMMARY

The invention is defined by the attached set of claims.

In a first aspect, a structure is provided. The structure comprises struts which are square or round tubes, the structure comprising: a first strut comprising a number of first slots which are cut-outs over a sidewall thereof; a second strut comprising an end portion, wherein the end portion comprises a pair of anchoring tenons to be inserted into the corresponding first slots of the first strut to releasably join together the first and the second struts such that the second strut is radially disposed with respect to the length of the first strut.

According to this aspect, this structure may be mounted by a single worker: a pair of struts can be releasably joined together in a mounted condition and remain mounted without the need of bolts. The single worker may then join further struts to the pair of struts without the risk of collapsing the structure obtained this way. Therefore, the structure has self-supporting features.

The structure does not require cumbersome operations to assembly all the parts of the structure. The configuration of the structure may allow error-free assembly operations and the single worker does not need advanced skills to carry out the assembly tasks.

Thanks to these features, the struts can be sent in an unmounted condition to the client's site avoiding a bulky shipment. The mounting tasks can be carried out on-site.

The connection of the struts may be easy to be achieved so the assembling is convenient and saves time in comparison with the known solutions.

Furthermore, the structure may be easily scalable, even by the clients themselves. The structure may also offer a flexible space configuration so as to meet specific space requirements of a client's site.

For example, the tenons may project from the end of the second strut in the longitudinal direction of the strut.

The struts may be laser tubes, i.e. tubes which have been cut by laser.

In a further aspect, a a creel to support yarn packages is provided. The creel comprises a frame structure comprising struts which are square or round tubes, the structure comprising: a first strut comprising a number of first slots which are cut-outs over a sidewall thereof; a second strut comprising an end portion, wherein the end portion comprises a pair of anchoring tenons to be inserted into the corresponding first slots of the first strut to releasably join together the first and the second struts such that the second strut is radially disposed with respect to the length of the first strut.

According to this further aspect, this creel frame structure may be mounted by a single worker: a pair of struts can be releasably joined together in a mounted condition and remain mounted without the need of bolts. The single worker may then join further struts to the pair of struts without the risk of collapsing the structure obtained this way. Therefore, the creel comprises a frame structure with self-supporting features.

The creel does not require cumbersome operations to assembly all the parts thereof. The configuration of the structure may allow error-free assembly operations and the single worker does not need advanced skills to carry out the assembly tasks.

Thanks to these features, the struts can be sent in an unmounted condition to the client's site avoiding a bulky shipment. The mounting tasks can be carried out on-site.

The connection of the struts may be easy to be achieved so the assembling is convenient and saves time in comparison with the known solutions.

Throughout the present disclosure, a square tube should be understood as a tube with a generally square, rectangular, polygonal or at least partially squared cross-section.

Throughout the present disclosure, a round tube should be understood as a tube with a generally round, elliptical or at least partially rounded cross-section.

Throughout the present disclosure, expressions such as horizontal, vertical, upper, lower, upright, tilted, etc are to be understood taking into account the construction of a structure or the like in an operating condition as a reference.

In some embodiments, a creel may have a frame structure comprising: a ninth strut comprising a flap portion extending from a sidewall of the ninth strut, wherein the ninth strut sidewall opposite to the sidewall of the flap portion comprises a recess to receive, at least partially, the flap portion in a folded condition and a latch to hold the flap portion in place; wherein the flap portion supports a yarn tensioner when the flap portion is folded on the recess. In such embodiments, the creel may also have other features disclosed herein, but it may also be constructed in any other way.

### BRIEF DESCRIPTION OF THE DRAWINGS

Non-limiting examples of the present disclosure will be described in the following, with reference to the appended drawings, in which:
Figure 1 schematically shows a view of a creel and a twisting machine associated therewith according to one example of the art;
Figure 2 schematically shows a perspective view of a creel according to one example;
Figure 3 schematically shows the creel of Figure 2 seen from a different angle;
Figure 4 schematically shows a partial and exploded view in perspective of a first strut and a second strut of a creel according to one example;
Figure 5 schematically shows a partial view in perspective of the first strut and two second struts of the creel of Figure 4 in a mounted condition;
Figure 6 schematically shows a partial view in perspective of the first strut and four second struts of the creel of Figure 4 in a mounted condition,
Figure 7 schematically shows a partial and exploded view in perspective of a third and a fourth struts of a creel according to a further example;
Figure 8 schematically shows a partial view in perspective of the third and the fourth struts of Figure 7 in a mounted condition;
Figure 9 schematically shows a partial and exploded view in perspective of a fifth and a sixth struts of a creel according to another example;
Figure 10 schematically shows a partial view in perspective of the fifth and the sixth struts of Figure 9 in a mounted condition;
Figure 11 schematically shows the fifth and the sixth struts of Figure 10 seen from a different angle;
Figure 12 schematically shows a partial and exploded view in perspective of a seventh and a eighth struts of a creel according to another example;
Figure 13 schematically shows a partial view in perspective of the seventh and the eighth struts of Figure 9 in a mounted condition;
Figure 14 schematically shows a partial view of a ninth strut with a flap portion in an unfolded condition of a creel according to another example;
Figure 15 schematically shows a partial view of the ninth strut of Figure 14 with the flap portion in a folded condition;
Figure 16 schematically shows a partial view of the ninth strut of Figure 15 with a yarn tensioner;
Figure 17 schematically shows a tenth strut of a creel according to a further example;
Figure 18 schematically shows an exploded view in perspective of a pair of tenth struts of Figure 17; and
Figure 19 schematically shows a view of the pair of tenth struts of Figure 18 in a coupled condition.

### DETAILED DESCRIPTION OF EXAMPLES

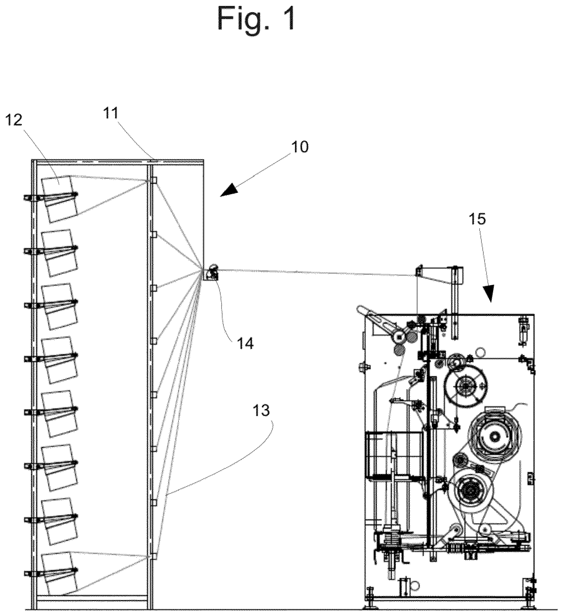

Figure 1 schematically shows a view of a creel 10 and a twisting machine 15 associated therewith according to one well-known example of the art. The twisting machine 15 is fed with yarn 13 from a plurality of yarn packages 12 which are supported by the creel 10. The creel 10 is configured as a structure which has a number of horizontal and vertical supporting members 11 such as bars, struts, rafters, uprights and the like.

The creel 10 may comprise some other components such as yarn breaking detectors 14 for sensing a possible breakage or running out of the yarn 13.

Instead of a twisting machine 15, the creel 10 may be associated with other types of textile devices such as weaving and knitting machines or the like.

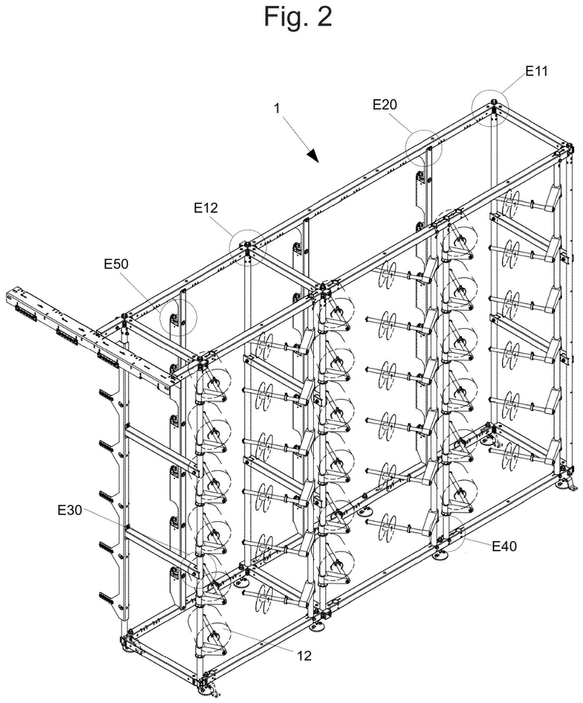

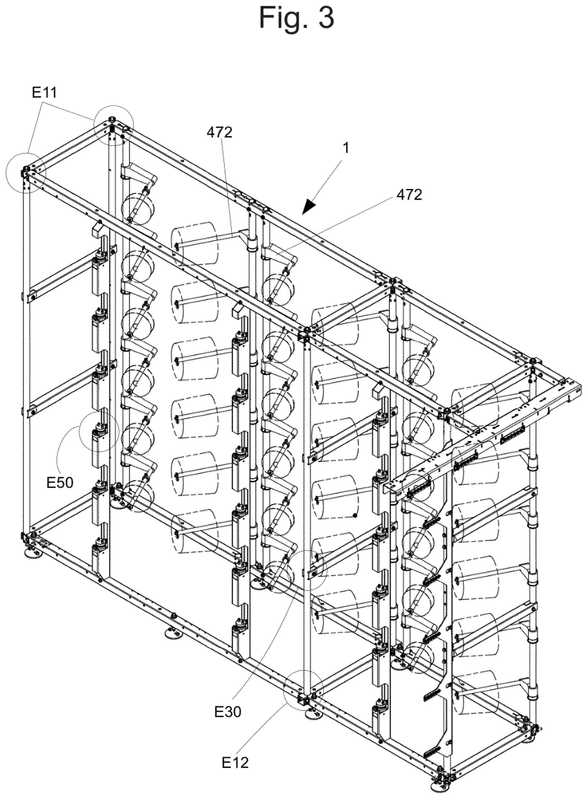

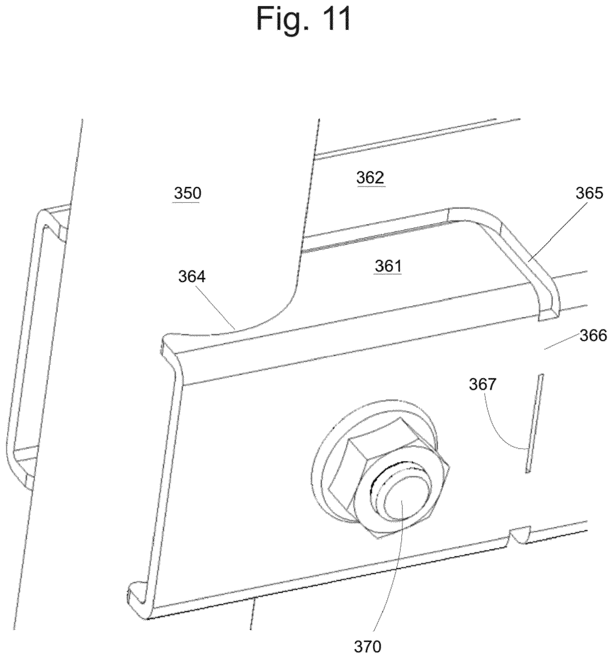

Figure 2 schematically shows a perspective view of a creel 1 according to one example. Figure 3 schematically shows the creel 1 of Figure 2 seen from a different angle. Figures 2 - 18 schematically show examples of joints that may be implemented in the frame structure of the creel 1 according to one aspect of the present disclosure. In Figures 2 and 3, some examples of joints which may be implemented in the creel 1 have been pointed out. Some examples of yarn packages 12 have been illustrated with dashed lines in Figures 2 and 3 for the sake of clarity.

According to one aspect, a creel to support yarn packages comprises a frame structure comprising struts. The struts are square or round tubes. The frame structure comprises:
a first strut 110 comprising a number of first slots 112 which are cut-outs over a sidewall 111 thereof;
a second strut 120 comprising an end portion 126, wherein the end portion 126 comprises a pair of anchoring tenons 121, 481 to be inserted into the corresponding first slots 112 of the first strut 110 to releasably join together the first and the second struts 110, 120 such that the second strut 120 is radially disposed with respect to the length of the first strut 110.

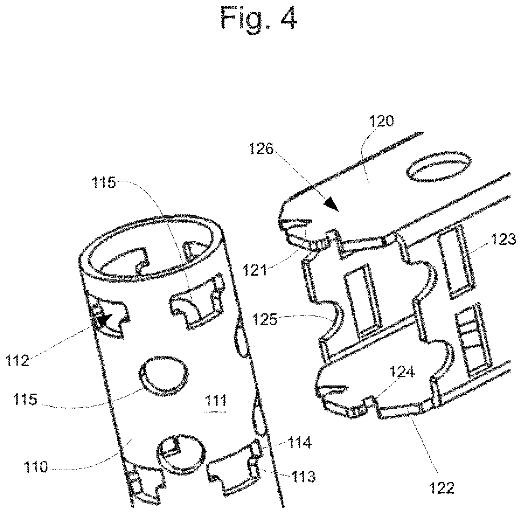

Figure 4 schematically shows a partial view in perspective of a first strut 110 and a second strut 120 of a creel according to one example.

In the present disclosure, struts may be metal laser tubes or any suitable alternative tubes.

In the example of Figure 4, the first strut 110 is a round tube and each second strut 120 is a square tube, and the end portion 126 of each second strut 120 comprises a rounded edge 124 matching, at least partially, the sidewall 111 of the first strut 110. However, in alternative examples, the first strut 110 could be a square tube and the second strut 120 could be a round tube so the end portion 126 would have a shape so as to suit the square section of the first strut 110.

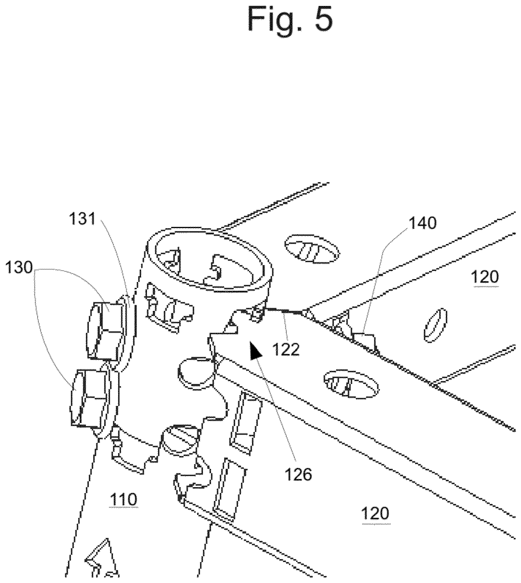

In one example, the frame structure may comprise a pair of second struts 120, wherein each second strut 120 may comprise chamfered edges 122 such that the chamfered edge 122 of one second strut 120 abuts on the chamfered edged 122 of the other second strut 120. This example can be seen in Figure 5. This Figure 5 schematically shows a partial view in perspective of the first strut 110 and two second struts 120 of the creel of Figure 4. The example of Figure 5 may be the way, for instance, to build a corner joint of the structure, wherein the two second struts 120 are in an L-shaped arrangement joined to the first strut 110. In Figures 2 and 3, the example of corner joint of Figure 5 can be seen indicated as E11.

The frame structure comprises a first fastener 130 radially fitted through a first bore 115 provided on the sidewall 111 of the first strut 110, wherein the first fastener 130 comprises a flange 131, 140 received, at least partially, in a cut-out groove 123, 483 of the second strut 120 so as to push the end portion 126 of the second strut 120 against the sidewall 111 of the first strut 110. A pair of first fasteners 130 can be seen in Figure 5. The first fastener 130 may provide a tight coupling between first and second struts. In an exemplary embodiment not falling within the scope of the claims, the second struts 120 may be firmly attached to the first strut 110 without the need of the first fastener 130 to keep first and second struts joined together.

The flange of the first fastener may be a head flange 131, a first nut 140 arranged at the opposite end to the head flange 131, or any other projections which may radially protrude from the length of the first fastener 130. The first fastener 130 may exemplary comprise a bolt with the head flange 131 and a first nut 140 arranged at the opposite end to the head flange 131 as per Figure 5. Alternatively, the first fastener 130 may be a screw, a rod, a pin or the like.

In some examples, the flange 131, 140 may cause an elastic deformation in the cut-out groove 123, 483 when the first strut 110 is tightened. This deformation may cause an effect similar to a spring washer, i.e. the bolt thread may be maintained in place since more friction and resistance to rotation may be created.

In some examples, the end portion 126 of the second strut 120 may comprise an indentation 125, 482 to allow the first fastener 130 to pass. For instance, the indentation 125 is shown in Figures 4 and 5 where the second strut 120 comprises four indentations 125. The number of indentations 125 will vary depending on particular needs.

In some examples, the sidewall 111 of the first strut 110 may comprise a pair of first bores 115 arranged aligned with each other so as to allow the first fastener 130 to radially pass through the first strut 110. This feature can be seen, for instance, in Figure 4 where the first strut 110 comprises a number of first bores 115 and two first bores 115 are aligned with each other in a radial direction of the first strut 110. The first strut 110 may pass through both aligned first bores 115.

In the illustrated example of Figure 5, first fasteners 130 pass through both aligned first bores 115. The respective first nuts 140 are received, at least partially, in the corresponding cut-out grooves 123 of the second strut 120. Alternatively, the first fastener 130 could be inversely positioned so the head flanges 131 could be received by the cut-out grooves 123.

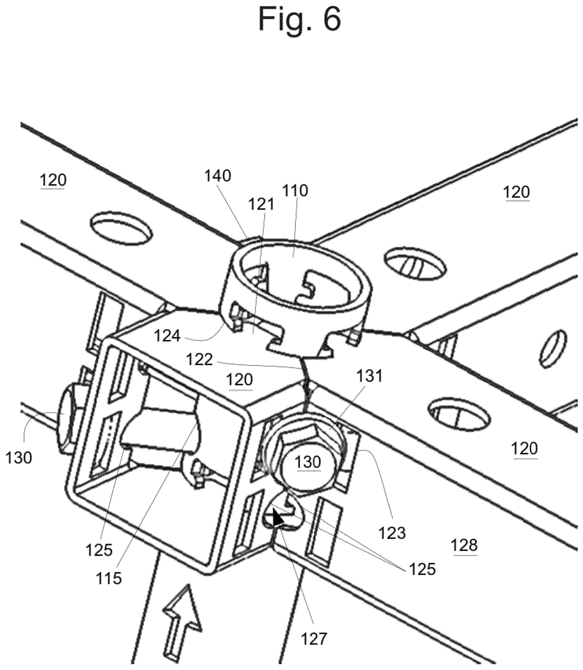

In some examples, a fastener hole 127 may be defined by a pair of complementary indentations 125 of adjacent second struts 120 when the chamfered edges 122 abut each other. The fastener hole 127 may be aligned with the first bore 115 of the first strut 110 so as to allow the first fastener 130 to pass through. The fastener hole 127 may be arranged between a pair of second struts 120, this way the first fastener 130 may be also arranged between both second struts 120 in a radial direction with respect to the length of the first strut 110, such that the flange 131 of the first fastener 130 may push the end portions 126 of both second struts 120 against the sidewall 111 of the first strut 110. Although the fastener hole 127 can be seen in Figure 6, the first fastener 130 may be used to tightly attach two second struts 120 to the first strut 110 as can be seen in Figure 5. The number of first fasteners 130 may vary depending on the case.

Figure 6 schematically shows a partial view in perspective of the first strut 110 and four second struts 120 of the creel of Figure 4. The Figure 6 illustrates an example of a cross-shaped joint for struts which can be used in the creel, wherein the second struts 120 are in a cross-shaped arrangement joined to the first strut 110. The example of cross-shaped joint of Figure 6 can be seen indicated as E12 in Figures 2 and 3.

In some examples, as those illustrated in Figure 6, the frame structure may comprise: four second struts 120 in a cross-shaped arrangement around the first strut 110; wherein the first fastener 110 may be arranged to simultaneously fasten the four second struts 120 to the first strut 110.

In some examples in which the frame structure comprises four second struts 120 in a cross-shaped arrangement around the first strut 110, the frame structure may further comprise: two first fasteners 130, each arranged between a different pair of second struts 120, and the first fasteners 130 may be disposed substantially perpendicular to each other and at different positions along the length of the first strut 110. This feature is illustrated in Figure 4.

In some examples, as those illustrated in Figures 4 to 6, the second struts 120 may comprise two cut-out grooves 123 in the same sidewall 128, one on top of each other and at different positions with respect to the length of first strut 110. This allows easy installation of the pair of first fasteners 130 perpendicularly to each other in a cross-shaped arrangement, as per Figure 6.

In Figure 6, two first fasteners 130 are each arranged between a different pair of second struts 120 and in skew radial directions with respect to the length of the first strut 110, such that each first fastener 130 may simultaneously secure two pairs of second struts 120 along different directions. This way a tight attachment of the second struts 120 to the first strut 110 may be achieved.

In Figure 6, the head flange 131 and the first nut 140 of one first fastener 130 are received by respective cut-out grooves 123 of different second struts 120.

Although the example of Figures 5 and 6 comprise first fasteners 130, the four second struts 120 may be tightly coupled to the first strut 110 without the need of first fastener 130.

In some examples, the anchoring tenons 121, 481 may be T-shaped, and the first slot 112 of the first strut 110 may comprise a wide portion 114 to be entered by the anchoring tenon 121, 481 and a narrow portion 113 where the anchoring tenon 121, 481 may be braced. In the examples of Figures 2 to 19, the first slots 112 are also T-shaped. Alternatively, the first slot 112 may show a different shape such as an arrow-shaped one.

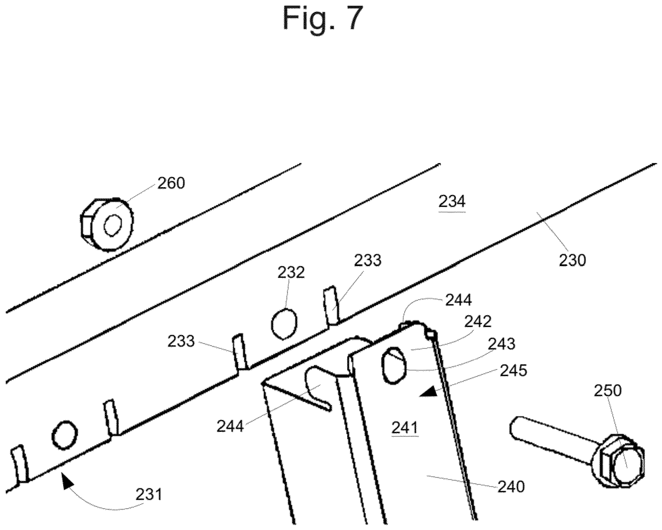

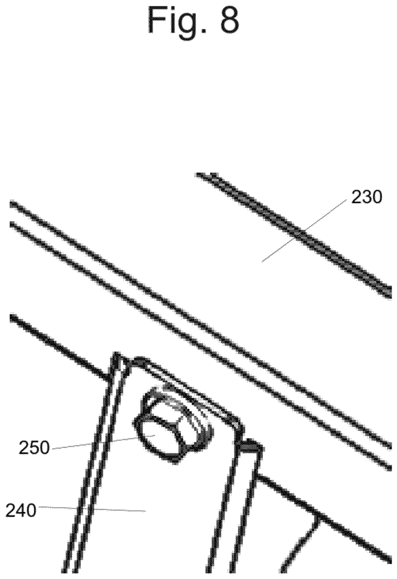

Figure 7 schematically shows a partial and exploded view in perspective of a third 230 and a fourth struts 240 of a creel according to a further example. Figure 8 schematically shows a partial view in perspective of the third 230 and the fourth struts 240 of Figure 7 in a mounted condition. The arrangement of Figures 7 and 8 may be the way to obtain an intermediate joint in the structure of the creel, wherein the third and fourth struts 240 are in a joined T-shaped arrangement. The example of intermediate joint of Figures 7 and 8 can be seen indicated as E20 in Figures 2 and 3.

In some examples, as those illustrated in Figures 7 and 8, the frame structure may further comprise:
a third 230 and a fourth 240 struts;
an end portion 245 of the fourth strut 240 which may be supported on a sidewall 231 of the third strut 230, such that the third and the fourth struts 230, 240 may be in a T-shaped arrangement;
the third strut 230 may comprise a second bore 232 to receive a second fastener 250 and may further comprise a second slot 233. The second bore 232 and the second slot 233 may be arranged in a sidewall 234;
the fourth strut 240 may comprise a wing 242 extending in axial direction from one sidewall 241 of the fourth strut 240, wherein the wing 242 may comprise a third bore 243 and a tab 244 to enter the second slot 233;
wherein the third bore 243 may be aligned with the second bore 232 to receive the second fastener 250, and the tab 244 may protrude from the wing 242 perpendicularly to the axial direction.

The combination of tabs 244 and second slots 233 may make it possible to attach the fourth strut 240 to the third strut 230 without the second fastener 250. This may be useful during the assembling of the creel's frame structure. The second fastener 250 may provide a tight joint between the third 230 and the fourth 240 struts once the tabs 244 are received in the second slots 233. The second fastener 250 may pass through the third strut 230, particularly two opposite second bores 232 and a second nut 260 may be coupled to the rest of the second fastener 250.

As can be seen in Figure 7, if the third strut 230 comprises a pair of second slots 233, the second bore 232 may be placed therebetween. Although there are two tabs 244 in the example of Figure 7, the number of tabs 244 and the corresponding second slots 233 may vary.

Third and fourth struts are square tubes in Figures 7 and 8, but they could show any suitable cross-section shape such as round.

It could be possible to provide a structure, and/or particularly a creel's structure comprising the features of the joint of Figures 7 and 8 and/or the features disclosed in claim 10. These features would not be necessarily combined with the features of the rest of examples described herein. For instance, a creel 1 would comprise the intermediate joint E20 without the rest of the herein disclosed examples.

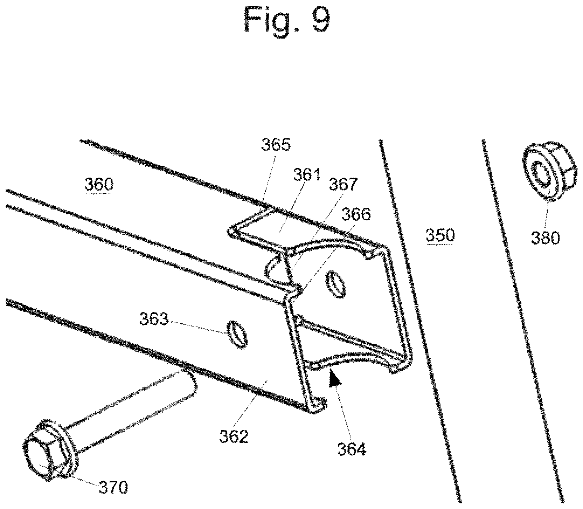

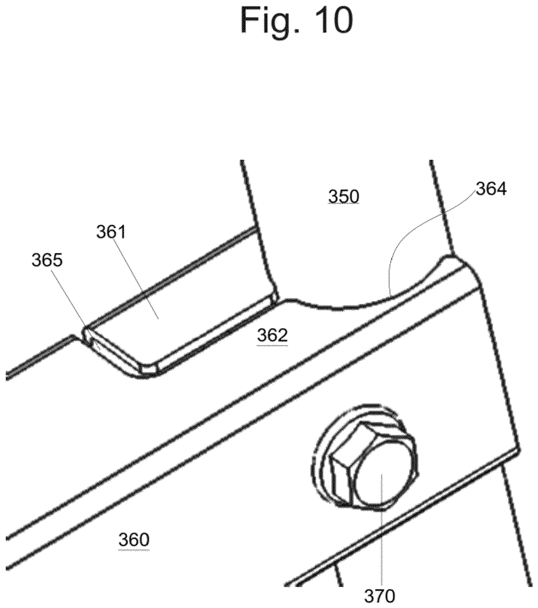

Figure 9 schematically shows a partial and exploded view in perspective of a fifth and a sixth struts of a creel according to another example. Figure 10 schematically shows a partial view in perspective of the fifth 350 and the sixth 360 struts of Figure 9 in a mounted condition. The example of Figure 10 may correspond to a T-shaped reinforcing joint of the frame structure, wherein the fifth 350 and the sixth 360 struts are joined forming a T-junction. The example of T-shaped reinforcing joint of Figures 9, 10 and 11 can be seen indicated as E30 in Figures 2 and 3.

In some examples, as those illustrated in Figures 9, 10 and 11, the frame structure may further comprise:
a fifth 350 and a sixth 360 struts;
the sixth strut 360 may comprise a U-shaped end portion 364 to receive the fifth strut 350 so as to form a T-junction.

In the examples of Figure 9 and 10, the fifth strut 350 comprises a round cross-section and the sixth strut 360 comprises a square cross-section. However, the fifth and the sixth struts may comprise cross-sections showing different shapes.

In the illustrated examples one branch 361 of the U-shaped end portion may be joined to the other branch 362 through a third fastener 370 to radially clamp the fifth strut 350 between them.

One branch 361 may be partially separated from the rest of the sixth strut 360 by means of a cleavage 365. The branch 361 may be partially linked to the rest of the sixth strut 360 by the link 366. A separation of the branch 361 from the other branch 362 may be large enough to allow the fifth strut 350 to be received in the U-shaped end portion 364. In order to obtain a greater separation between branches 361, 362, branch 361 may be bended at the link 366 and in an opposite direction to the branch 362.

In the example of Figure 9, there are two cleavages 365 arranged opposite to each other and starting from the opening defined between the branches 361, 362. These cleavages 365 are L-shaped but they may vary. The cleavage 365 may allow to easily adjust the relative distance between both branches 361, 362 as it will be explained latter. In some examples, the link 366 may comprise a notch 367 to make it easy to bend the branch 361 with respect to rest of the sixth strut 360.

In order to join together the fifth strut 350 and the sixth strut 360, the fifth strut 350 may be received in the U-shaped end portion 364. The length of the fifth strut 350 may be substantially perpendicular to the length of the sixth strut 360. Both branches 361, 362 are in a relative distant position so as to allow the fifth strut 350 to enter.

Once the fifth strut 350 is in place, the third fastener 370 may pass through a pair of fourth bores 363, each positioned at respective branches 361, 362. A third nut 380 may be coupled to the rest of the third fastener 370 so as to tighten it. Thanks to the cleavage 365, when the third fastener 370 is tightened, the relative distance between both branches 361, 362 may be shorten and the fifth strut 350 may tightly clamped by the branches 361, 362.

It could be possible to provide a structure, and/or particularly a creel's structure comprising the features of the joint of Figures 9, 10 and 11 and/or the features disclosed in claim 11. These features would not be necessarily combined with the features of the rest of examples described herein. For instance, a creel 1 would comprise the T-shaped reinforcing joint E30 without the rest of the herein disclosed examples.

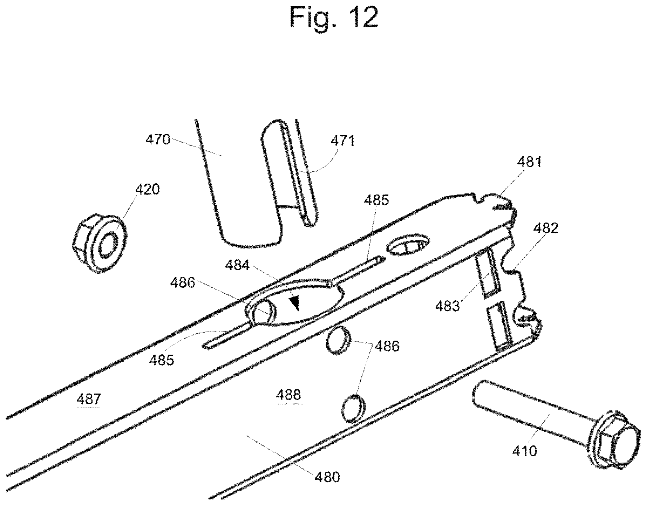

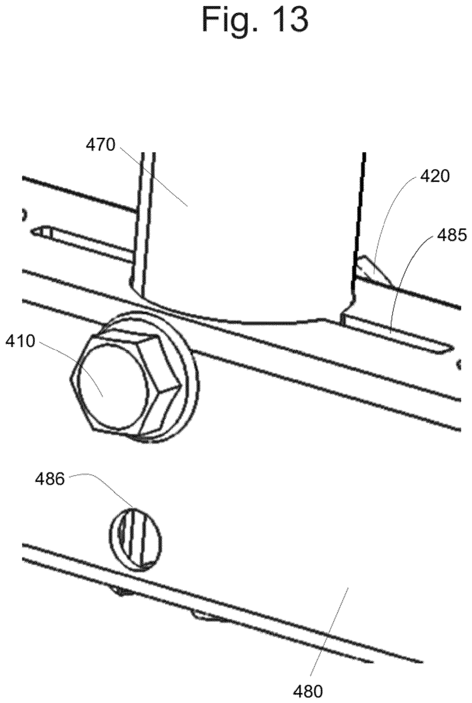

Figure 12 schematically shows a partial and exploded view in perspective of a seventh 470 and a eighth 480 struts of a creel according to another example. Figure 13 schematically shows a partial view in perspective of the seventh 470 and the eighth 480 struts of Figure 12 in a mounted condition. The example illustrated in Figure 12 may be used to bear a yarn package support, wherein the seventh 470 and the eighth 480 struts are joined forming a T-junction. The example of joint for a yarn package support of Figures 12 and 13 can be seen indicated as E40 in Figures 2 and 3.

In some examples, as those illustrated in Figures 12 and 13, the frame structure may further comprise:
a seventh strut 470 and an eighth strut 480;
the seventh strut 470 may be a yarn package support,
wherein the eighth strut 480 may comprise an opening 484 at a sidewall 487 to receive the seventh strut 470 so as to form a T-junction;
the seventh strut 470 may comprise a first slotted hole 471 to receive a fourth fastener 410 while the fourth fastener 410 passes through two opposite sidewalls 488 of the eighth strut 480. In some examples, the first slotted hole 471 may run in the axial direction from one end of the seventh strut 470;
the opening 484 may comprise a pair of slits 485 arranged in the longitudinal direction such that two opposite sidewalls 488 of the eighth strut 480 hold the seventh strut 470 when the fourth fastener 410 is tightened.

In some examples, the seventh strut 470 may support at least one yarn package 12. In the examples of Figures 2 and 3, the seventh strut 470 bears a plurality of yarn packages 12. Each yarn package 12 may be attached to the seventh strut 470 by means of an arm 472. The arm 472 may stick out from the seventh strut 470. The arm 472 may be rotatably mounted to the seventh strut 470 so as to adjust the yarn package 12 in a clockwise or counter-clockwise direction with respect to the length of the seventh strut 470. This way, the arm 472 may be rotated around the length of the seventh strut 470.

In the illustrated example of Figures 12 and 13, there are two openings 484 arranged at two opposite sidewalls 487, so the seventh strut 470 may pass both opposite openings 484 and slightly protrude from both sidewalls 487. The two openings 484 arranged that way may help the user to install the seventh strut 470 between a pair of already mounted eight struts 480 as will explained in the following.

For instance, one end of the seventh strut 470 may enter the openings 484 of the lower eighth strut 480, one after the other. Then, the other end of the seventh strut 470 may enter the openings 484 of the upper eight strut 480. Once introduced, the seventh strut 470 may stay in place without the need of the fourth fastener 410, for instance due to a snap fitting coupling between the seventh strut 470 and the openings 484. The first slotted hole 471 of the seventh strut 470 may be put in place with the first slotted hole 471 aligned with at least one fifth bore 486 so as to allow the the fourth fastener 410 to enter the fifth bore 486 and the first slotted hole 471.

In the example of Figure 12, there are two first slotted holes 471 placed opposite with respect to the length of the seventh strut 470. The fourth fastener 410 may pass through the seventh strut 470 in radial direction by means of both first slotted holes 471. Each of the first slotted holes 471 are aligned with two respective fifth bores 486. However, the number of fifth bores 486 may vary. The fourth fastener 410 may support the seventh strut 470 when passing through the aligned fifth bores 486 at the two opposite sidewalls 488.

In the examples of Figure 12 and 13, the fourth fastener 410 passes through the eighth strut 480 and seventh strut 470. A nut 420 may be coupled to the rest of the fourth fastener 410 and then be tightened. Both pair of slits 485 may partially divide the eighth strut 480 into two halves which can be slightly bended by the action of the tightened fourth fastener 410. This way the seventh strut 470 may be firmly hold by the eighth strut 480.

As can be seen in Figure 12, the eighth strut 480 may also comprise anchoring tenons 481, indentations 482 or cut-out grooves 483. The function of such elements is similar to those equivalent ones of the first strut 120.

The eighth strut 480 may comprise a plurality of fifth bores 486 at each sidewall 488. The example of Figures 12 and 13 comprises a pair of fifth bores 486 vertically aligned with each other, along with two openings 484 each arranged at one of the two opposite sidewalls 487. The user may put the seventh strut 470 into either an upper or lower opening 484 and the fourth fastener 410 through an upper or lower fifth bore 486. A reliable T-junction would be formed regardless of which opening 484 may be used for holding the seventh strut 470. Therefore, a foolproof configuration may be achieved.

It could be possible to provide a structure, and/or particularly a creel's structure comprising the features of the joint of Figures 12 and 13 and/or the features disclosed in claim 12. These features would not be necessarily combined with the features of the rest of examples described herein. For instance, a creel 1 would comprise the T-junction E40 without the rest of the herein disclosed examples.

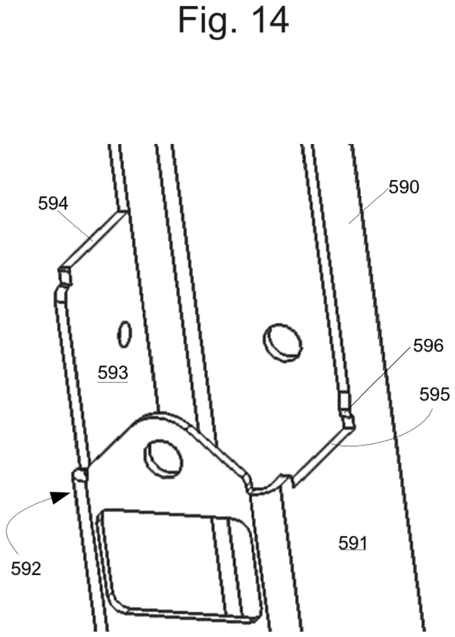

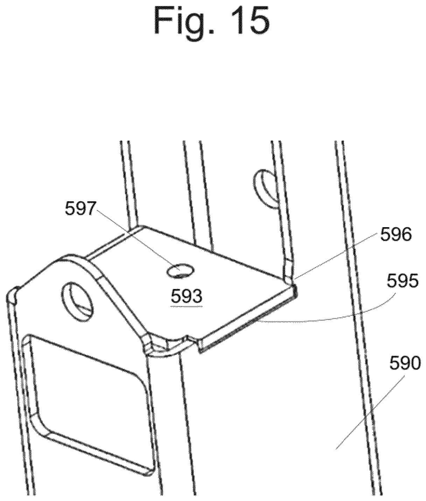

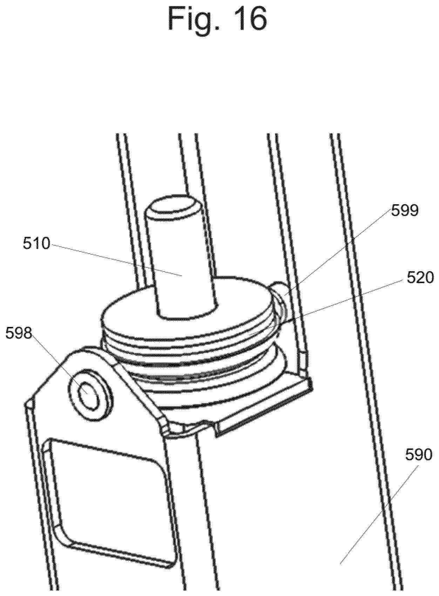

Figure 14 schematically shows a partial view of a ninth strut 590 with a flap portion 593 in an unfolded condition of a creel according to another example. Figure 15 schematically shows a partial view of the ninth strut 590 of Figure 14 with the flap portion 593 in a folded condition. Figure 16 schematically shows a partial view of the ninth strut 590 of Figure 15 with a yarn tensioner 510, 520. The example of ninth strut 590 with a yarn tensioner 510, 520 of Figures 14, 15 and 16 can be seen indicated as E50 in Figures 2 and 3.

In some examples, as those illustrated in Figures 14 to 16, the frame structure may further comprise:
a ninth strut 590 which may comprise a flap portion 593 extending from a sidewall 592 of the ninth strut 590,
wherein the ninth strut sidewall 592 opposite to the sidewall 591 of the flap portion may comprise a recess 595 to receive at least partially the flap portion 593 in a folded condition and a latch 596 to hold the flap portion 593 in place;
wherein the flap portion 593 may support a yarn tensioner when the flap portion 593 is folded on the recess 595.

In Figure 14, the flap portion 593 is in an upright or unfolded condition. In this condition the flap portion 593 may be substantially an extension of the ninth strut sidewall 592 in the axial direction. The flap portion 593 may be bended or folded down in such a way to be received by the recess 595. The latter can be seen in Figure 15, specifically a folded condition of the flap portion 593.

In Figures 14 - 16, the flap portion 593 may be folded to cover at least partially a hollow core of the ninth strut 590. A transversal notch (not illustrated) in the base of the flap portion 593 may help to fold the flap portion 593 as described herein.

The recess 595 may be a kind of step with a shape matching at least partially the cross section of the flap portion 593. Alternatively, the recess 595 may match the cross section of a tip of the flap portion 593.

In the bended or folded condition, the flap portion 593 may support a yarn tensioner. The flap portion 593 may comprise a fifth bore 597 to fix a shaft 510 of the yarn tensioner. The yarn tensioner also comprises tensioning plates 520 which are passed through by the shaft 510.

The ninth strut 590 may also comprise a pair of yarn guides 598, 599 to allow the yarn to enter and leave the yarn tensioner. The yarn guides may be an inlet and an outlet of the yarn tensioner.

The examples of Figures 14 to 16 may be made from tube cut by laser in one operation. This may be a quick and easy way to obtain a ninth strut 590.

Alternatively to the example of Figure 15, there may be two latches 596 to hold the flap portion 593 in place. Each of the latches 596 may be placed at both ends of the recess 595.

It could be possible to obtain a structure and particularly a creel's structure only comprising the features of the examples of Figures 14 to 16 and/or the features disclosed in claim 13. These features would not be combined with the features of the rest of examples described herein.

It could be possible to provide a structure, and/or particularly a creel's structure comprising the features of the Figures 14 to 16 and/or the features disclosed in claim 13. These features would not be necessarily combined with the features of the rest of examples described herein. For instance, a creel 1 would comprise the yarn package support E50 without the rest of the herein disclosed examples.

It could be also possible to combine the features of the example of Figures 14 to 16 and/or the features disclosed in claim 13 with another structure or creel's structure.

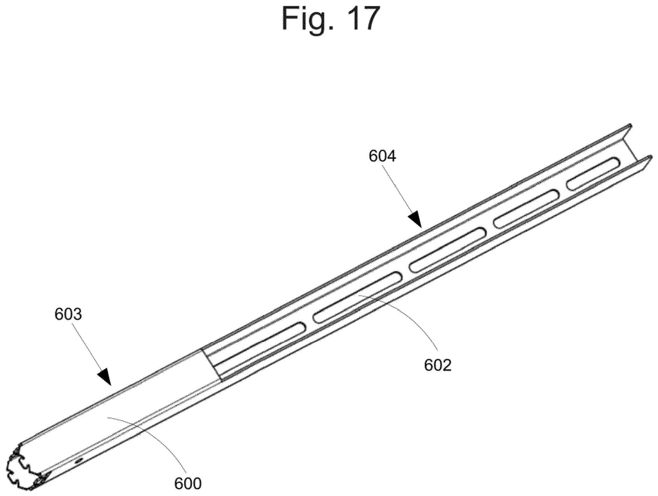

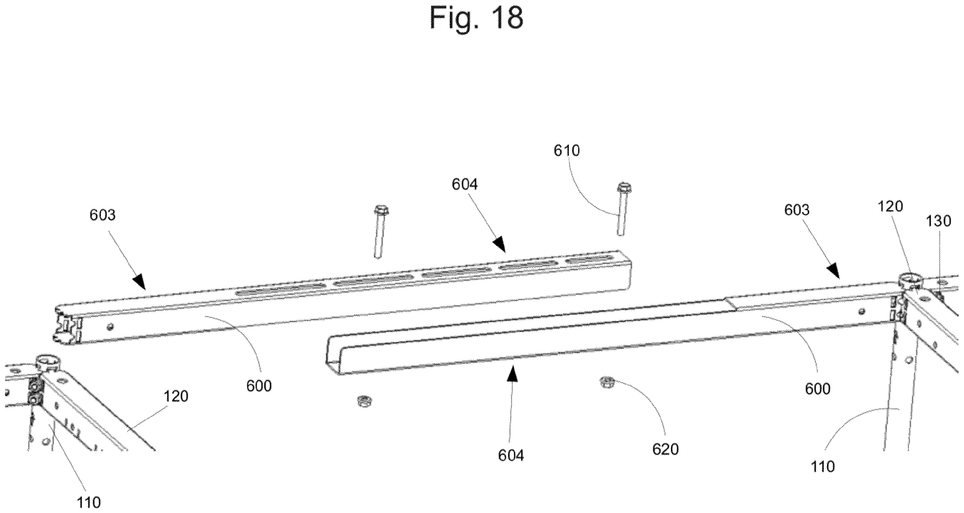

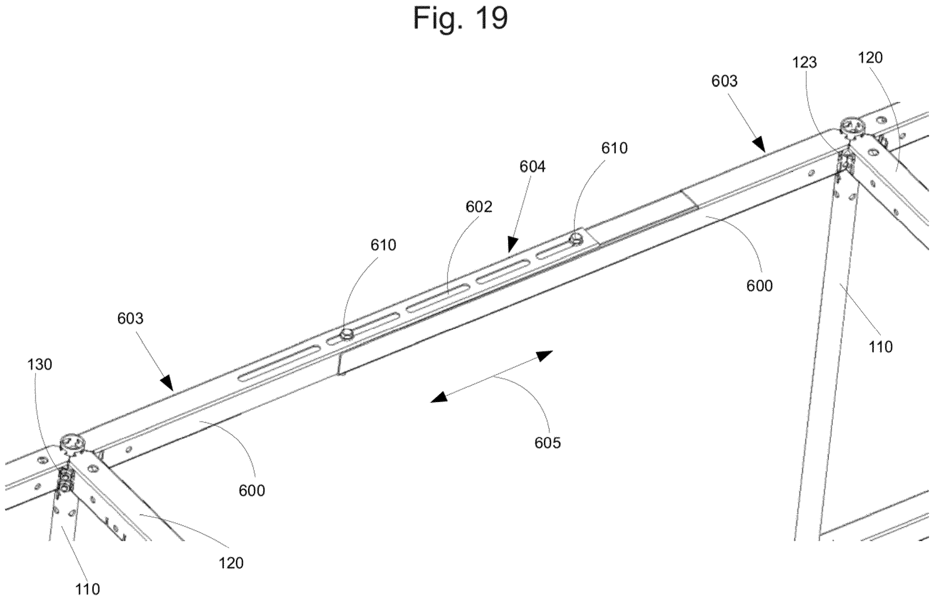

Figure 17 schematically shows a tenth strut 600 of a creel according to a further example. Figure 18 schematically shows an exploded view in perspective of a pair of tenth struts 600 of Figure 17. Figure 19 schematically shows a view of the pair of tenth struts 600 of Figure 18 in a coupled condition. By coupled condition is meant a condition where the pair of tenth struts 600 is in a relative mounted condition.

In some examples, the tenth strut 600 may comprise a joining portion 603 to join the tenth strut 600 to another strut such as a first strut 110. Alternatively, the tenth strut 600 could be joined to any other herein disclosed strut. The tenth strut 600 may further comprise a coupling portion 604 to couple the tenth strut 600 to another tenth strut 600. The coupling portion 604 may comprise a series of second slotted holes 602 arranged in axial direction to receive fifth fasteners 610 in a coupled condition. Alternatively to the series of second slotted holes 602, a string of bores or the like may be provided. Some nuts 620 of the fifth fasteners 610 have been illustrated in Figure 18.

In Figure 18, a pair of tenth struts 600 are about to be coupled to each other through respective coupling portions 604. In Figure 19, the pair of tenth struts 600 has been already coupled to each other.

In some examples, the coupling portions 604 may comprise matching cross-sections, such that a pair of tenth struts 600 may be slidably mounted to each other in axial direction. One coupling portion 604 may be fitted into another so that a pair of tenth struts 600 may be made longer or shorter. This way the length of the coupled pair of tenth struts 600 may be adjusted following direction 605. The overall length of the coupled pair of tenth struts 600 may be varied depending on the needs.

On the right side of Figure 18, one of the tenth struts 600 is radially arranged with respect to the length of a first strut 110 to which it is joined in a similar way to the second strut 120 joined to the first strut 110. Some first fasteners 130 may be also used along with cut-out grooves 123. On the left side of Figure 18, there is another tenth strut 600 which is about to be joined to a first strut 110.

By way of example, the joining portion 603 of the tenth strut 600 on the left side of Figure 18 may be joined to the first strut 110. Then, the coupling portions 604 may be joined together.

In Figure 19, each of the tenth struts 600 is already radially arranged with respect to the length of a first strut 110 to which it is joined. The overall length of the coupled pair of tenth struts 600 may depend on the relative distance between the longitudinal axes of the first struts 110.

In some examples, the tenth strut 600 may comprise a square tube. The square tube may be void of one of its side walls, at least partially, at the coupling portion 604. The opposite sidewall may comprise the series of second slotted holes 602. This way, in a coupled condition a second slotted hole 602 of one tenth strut 600 may be aligned with a second slotted hole 602 of another tenth strut 600. A fifth fastener 610 may pass through the aligned second slotted holes 602 so as to tightly fix the coupling between both tenth struts 600 while radially passing through the pair of coupled tenth struts 600.

Alternatively to the square tube, a round tube may be void of a half sidewall and may comprise a series of second slotted holes 602 in the sidewall left.

In some examples, a pair of creels 1 as per Figures 2 and 3 may be connected to each other by means of a pair of tenth struts 600. This way, a single creel 1 may be produced.

The number of struts in the herein described examples would vary depending on the particular requirements of each frame structure.

According to another aspect, a structure is provided. The structure comprises struts which are square or round tubes and the structure comprises:
a first strut 110 comprising a number of first slots 112 which are cut-outs over a sidewall 111 thereof;
a second strut 120 comprising an end portion 126, wherein the end portion 126 comprises a pair of anchoring tenons 121, 481 to be inserted into the corresponding first slots 112 of the first strut 110 to releasably join together the first 110 and the second struts 120 such that the second strut 120 is radially disposed with respect to the length of the first strut 110.

Although the examples described herein correspond to different examples of a creel, the structure of this further aspect may comprise any features of the creel's frame structure *mutatis mutandis.* The structure obtained may be used for any purposes other than textile field.

Although only a number of examples have been disclosed herein, other alternatives, modifications, uses and/or equivalents thereof are possible. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A structure comprising struts which are square or round tubes, the structure comprising:
a first strut (110) comprising a number of first slots (112) which are cut-outs over a sidewall (111) thereof;
a second strut (120) comprising an end portion (126), wherein the end portion (126) comprises a pair of anchoring tenons (121) to be inserted into the corresponding first slots (112) of the first strut (110) to releasably join together the first and the second struts (110, 120) such that the second strut (120) is radially disposed with respect to the length of the first strut (110);
a first fastener (130) radially fitted through a first bore (115) provided on the sidewall (111) of the first strut, **characterized in that** the first fastener (130) comprises a flange (131, 140) received, at least partially, in a cut-out groove (123) of the second strut (120) so as to push the end portion (126) of the second strut (120) against the sidewall (111) of the first strut (110).

2. The structure according to claim 1 further comprising:
a pair of second struts (120), wherein each second strut (120) comprises chamfered edges (122) such that the chamfered edge (122) of one second strut (120) abuts on the chamfered edged (122) of the other second strut (120).

3. The structure according to claim 1, wherein the end portion (126) of the second strut comprises an indentation (125) to allow the first fastener (130) to pass.

4. The structure according to claim 3, wherein the sidewall (111) of the first strut comprises a pair of first bores (115) arranged aligned with each other so as to allow the first fastener (130) to radially pass through the first strut (110).

5. The structure according to claims 2 and 3, wherein a fastener hole (127) is defined by a pair of complementary indentations (125) of adjacent second struts (120) when the chamfered edges (122) abut each other, the fastener hole (127) being aligned with the first bore (115) of the first strut so as to allow the first fastener (130) to pass through.

6. The structure according to claims 4 and 5, further comprising:
four second struts (120) in a cross-shaped arrangement around the first strut (110);
wherein the first fastener (130) is arranged to simultaneously fasten the four second struts (120) to the first strut (110).

7. The structure according to claims 1 and 6, further comprising:
two first fasteners (130), each arranged between a different pair of second struts (120), the first fasteners (130) being disposed perpendicular to each other and at different positions along the length of the first strut (110).

8. The structure according to any of claims 1 - 7, wherein the anchoring tenons (121) are T-shaped, and the first slot (112) of the first strut (110) comprises a wide portion (114) to be entered by the anchoring tenon (121) and a narrow portion (113) where the anchoring tenon (121) is braced.

9. The structure according to any of claims 1 - 8, wherein the first strut (110) is a round tube and each second strut (120) is a square tube, and the end portion (126) of each second strut (120) comprises a rounded edge matching, at least partially, the sidewall of the first strut (110).

10. The structure according to any of the preceding claims, further comprising:
a third strut (230) and a fourth strut (240),
an end portion (245) of the fourth strut is supported on a sidewall (231) of the third strut, such that the third and the fourth struts (230, 240) are in a T-shaped arrangement;
the third strut (230) comprises a second bore (232) to receive a second fastener (250) and further comprises a second slot (233);
the fourth strut (240) comprises a wing (242) extending in axial direction from one sidewall (241) of the fourth strut, wherein the wing comprises a third bore (243) and a tab (244) to enter the second slot (233);
wherein the third bore (243) is aligned with the second bore (232) to receive the second fastener (250), and the tab (244) protrudes from the wing (242) perpendicularly to the axial direction.

11. The structure according to any of the preceding claims, further comprising:
a fifth strut (350) and a sixth strut (360);
the sixth strut (360) comprises a U-shaped end portion to receive the fifth strut (350) so as to form a T-junction.

12. The structure according to any of the preceding claims, further comprising:
a seventh strut (470) and an eighth strut (480);
the seventh strut (470) being a yarn package support,
wherein the eighth strut (480) comprises an opening (484) at a sidewall (487) to receive the seventh strut (470) so as to form a T-junction,;
the seventh strut (470) comprises a first slotted hole (471) to receive a fourth fastener (410) while the fourth fastener (410) passes through two opposite sidewalls (488) of the eighth strut;
the opening (484) comprises a pair of slits (485) arranged in the longitudinal direction such that two opposite sidewalls (488) of the eighth strut hold the seventh strut when the fourth fastener is tightened.

13. The structure according to any of the preceding claims, further comprising:
a ninth strut (590) comprising a flap portion (593) extending from a sidewall (592) of the ninth strut,
wherein the ninth strut sidewall (591) opposite to the sidewall (592) of the flap portion (593) comprises a recess (595) to receive, at least partially, the flap portion (593) in a folded condition and a latch (596) to hold the flap portion (593) in place;
wherein the flap portion (593) supports a yarn tensioner when the flap portion (593) is folded on the recess (595).

14. A creel to support yarn packages comprising a frame structure, wherein the frame structure is a structure according to any of claims 1 - 13.

## Patentansprüche

1. Eine Struktur umfassend Streben, welche quadratische oder runde Röhre sind, wobei die Struktur folgendes umfasst:
eine erste Strebe (110) umfassend eine Anzahl an ersten Aussparungen (112), welche Ausschnitte an einer Seitenwand (111) davon sind;
eine zweite Strebe (120) umfassend einen Endteil (126), wobei der Endteil (126) ein Paar von Verankerungszapfen (121) umfasst, die in die entsprechenden ersten Aussparungen (112) der ersten Strebe (110) einzusetzen sind, um die erste und die zweite Strebe (110, 120) miteinander lösbar zu verbinden, so dass die zweite Strebe (120) bezüglich der Länge der ersten Strebe (110) radial angeordnet ist;
ein erstes Befestigungselement (130), das durch eine erste an der Seitenwand (111) der ersten Strebe vorhandene Bohrung (115) radial eingepasst ist, **dadurch gekennzeichnet, dass** das erste Befestigungselement (130) einen Flansch (131, 140) umfasst, der mindestens teilweise in einer Aussparungsnut (123) der zweiten Strebe (120) aufgenommen ist, um den Endteil (126) der zweiten Strebe (120) gegen die Seitenwand (111) der ersten Strebe (110) zu drücken.

2. Die Struktur nach Anspruch 1 weiterhin umfassend:
ein Paar von zweiten Streben (120), wobei jede zweite Strebe (120) abgeschrägte Kanten (122) umfasst, so dass die abgeschrägte Kante (122) von einer zweiten Strebe (120) an die abgeschrägte Kante (122) von der anderen zweiten Strebe (120) angrenzt.

3. Die Struktur nach Anspruch 1, wobei der Endteil (126) von der zweiten Strebe eine Einkerbung (125) umfasst, um den Durchgang des ersten Befestigungselements (130) zu ermöglichen.

4. Die Struktur nach Anspruch 3, wobei die Seitenwand (111) der ersten Strebe ein Paar von ersten Bohrungen (115) umfasst, die fluchtend miteinander angeordnet sind, um den radialen Durchgang des ersten Befestigungselements (130) durch die erste Strebe (110) zu ermöglichen.

5. Die Struktur nach den Ansprüchen 2 und 3, wobei eine Befestigungselementöffnung (127) durch ein Paar von sich ergänzenden Einkerbungen (125) von angrenzenden zweiten Streben (120) definiert ist, wenn die abgeschrägten Kanten (122) an einander angrenzen, wobei die Befestigungselementöffnung (127) mit der ersten Bohrung (115) der ersten Strebe fluchtet, um den Durchgang des ersten Befestigungselements (130) zu ermöglichen.

6. Die Struktur nach den Ansprüchen 4 und 5, weiterhin umfassend:
vier zweite Streben (120) in einer kreuzförmigen Anordnung um die erste Strebe (110) herum;
wobei das erste Befestigungselement (130) angeordnet ist, um die vier zweiten Streben (120) an der ersten Strebe (110) gleichzeitig zu befestigen.

7. Die Struktur nach den Ansprüchen 1 und 6, weiterhin umfassend:
zwei erste Befestigungselemente (130), die jeweils zwischen einem verschiedenen Paar von zweiten Streben (120) angeordnet sind, wobei die ersten Befestigungselemente (130) senkrecht zueinander und in verschiedenen Positionen entlang der Länge der ersten Strebe (110) angeordnet sind.

8. Die Struktur nach einem der Ansprüche 1 - 7, wobei die Verankerungszapfen (121) T-förmig sind und die erste Aussparung (112) der ersten Strebe (110) einen breiten Teil (114) umfasst, durch den der Verankerungszapfen (121) einzuführen ist und einen engen Teil (113) umfasst, wo der Verankerungszapfen (121) gestützt ist.

9. Die Struktur nach einem der Ansprüche 1 - 8, wobei die erste Strebe (110) ein rundes Rohr ist und jede zweite Strebe (120) ein quadratisches Rohr ist, und wobei der Endteil (126) von jeder zweiten Strebe (120) eine runde Kante umfasst, die mindestens teilweise zu der Seitenwand der ersten Strebe (110) passt.

10. Die Struktur nach einem der vorhergehenden Ansprüche, weiterhin umfassend:
eine dritte Strebe (230) und eine vierte Strebe (240),
wobei ein Endteil (245) der vierten Strebe an einer Seitenwand (231) der dritten Strebe gestützt ist, so dass die dritte und die vierte Streben (230, 240) in einer T-förmigen Anordnung sind;
wobei die dritte Strebe (230) eine zweite Bohrung (232) umfasst, um ein zweites Befestigungselement (250) aufzunehmen und weiterhin eine zweite Aussparung (233) umfasst;
wobei die vierte Strebe (240) einen Flügel (242) umfasst, der sich in axialer Richtung von einer Seitenwand (241) der vierten Strebe hinaus erstreckt, wobei der Flügel eine dritte Bohrung (243) und einen Ansatz (244) zur Einführung in die zweite Aussparung (233) umfasst;
wobei die dritte Bohrung (243) mit der zweiten Bohrung (232) fluchtet, um das zweite Befestigungselement (250) aufzunehmen, und wobei der Ansatz (244) senkrecht zur axialen Richtung von dem Flügel (242) herausragt.

11. Die Struktur nach einem der vorhergehenden Ansprüche, weiterhin umfassend:
eine fünfte Strebe (350) und eine sechste Strebe (360);
wobei die sechste Strebe (360) einen U-förmigen Endteil umfasst, um die fünfte Strebe (350) aufzunehmen, um eine T-Verbindung zu bilden.

12. Die Struktur nach einem der vorhergehenden Ansprüche, weiterhin umfassend:
eine siebte Strebe (470) und eine achte Strebe (480);
wobei die siebte Strebe (470) ein Garnspulenträger ist,
wobei die achte Strebe (480) eine Öffnung (484) an einer Seitenwand (487) umfasst, um die siebte Strebe (470) aufzunehmen, um eine T-Verbindung zu bilden;
wobei die siebte Strebe (470) eine erste geschlitzte Öffnung (471) umfasst, um ein viertes Befestigungselement (410) aufzunehmen, während das vierte Befestigungselement (410) zwei gegenüber liegende Seitenwände (488) der achten Strebe durchgeht;
wobei die Öffnung (484) ein Paar von Aussparungen (485) umfasst, die in der Längsrichtung angeordnet sind, so dass zwei gegenüber liegende Seitenwände (488) der achten Strebe die siebte Strebe halten, wenn das vierte Befestigungselement festgemacht wird.

13. Die Struktur nach einem der vorhergehenden Ansprüche, weiterhin umfassend:
eine neunte Strebe (590) umfassend einen Laschenteil (593), der sich von einer Seitenwand (592) der neunten Strebe hinaus erstreckt,
wobei die Seitenwand (591) der neunten Strebe, die gegenüber der Seitenwand (592) des Laschenteils (593) liegt eine Vertiefung (595) umfasst, um mindestens teilweise den Laschenteil (593) in einem geklappten Zustand aufzunehmen und eine Arretierung (596) umfasst, um den Laschenteil (593) in Position zu halten;
wobei der Laschenteil (593) eine Fadenbremse trägt, wenn der Laschenteil (593) auf der Vertiefung (595) geklappt ist.

14. Ein Spulengatter zum Tragen von Garnspulen umfassend eine Rahmenstruktur, wobei die Rahmenstruktur eine Struktur nach einem der Ansprüche 1 - 13 ist.

## Revendications

1. Une structure comprenant des entretoises qui sont des tubes carrés ou arrondis, la structure comprenant :
une première entretoise (110) comprenant un certain nombre de premières encoches (112) qui sont des découpes dans une paroi latérale (111) de celle-là ;
une seconde entretoise (120) comprenant une partie d'extrémité (126), dans laquelle la partie d'extrémité (126) comprend une paire de tenons d'ancrage (121) destinés à être insérés dans les premières encoches correspondantes (112) de la première entretoise (110) afin de joindre de manière amovible les entretoises première et seconde (110, 120) de façon que la seconde entretoise (120) est radialement disposée par rapport à la longueur de la première entretoise (110) ;
un premier élément de fixation (130) radialement ajusté à travers un premier trou (115) fourni dans la paroi latérale (111) de la première entretoise, **caractérisée en ce que** le premier élément de fixation (130) comprend une bride (131, 140) reçue, au moins en partie, dans une rainure de découpe (123) de la seconde entretoise (120) de manière à pousser la partie d'extrémité (126) de la seconde entretoise (120) contre la paroi latérale (111) de la première entretoise (110).

2. La structure selon la revendication 1, comprenant en outre :
une paire de secondes entretoises (120), dans laquelle chaque seconde entretoise (120) comprend des bords chanfreinés (122) de façon que le bord chanfreiné (122) d'une seconde entretoise (120) jouxte le bord chanfreiné (122) de l'autre seconde entretoise (120).

3. La structure selon la revendication 1, dans laquelle la partie d'extrémité (126) de la seconde entretoise comprend une échancrure (125) pour permettre le passage du premier élément de fixation (130).

4. La structure selon la revendication 3, dans laquelle la paroi latérale (111) de la première entretoise comprend une paire de premiers trous (115) disposés alignés l'un avec l'autre de manière à permettre un passage radial du premier élément de fixation (130) à travers la première entretoise (110).

5. La structure selon les revendications 2 et 3, dans laquelle une ouverture d'élément de fixation (127) est définie par une paire d'échancrures complémentaires (125) de secondes entretoises adjacentes (120) lorsque les bords chanfreinés (122) jouxtent les uns les autres, l'ouverture d'élément de fixation (127) étant alignée avec le premier trou (115) de la première entretoise afin de permettre le passage du premier élément de fixation (130).

6. La structure selon les revendications 4 et 5, comprenant en outre :
quatre secondes entretoises (120) disposées en croix autour de la première entretoise (110);
dans laquelle le premier élément de fixation (130) est disposé de manière à assujettir de manière simultanée les quatre secondes entretoises (120) à la première entretoise (110).

7. La structure selon les revendications 1 et 6, comprenant en outre :
deux premiers éléments de fixation (130), chacun d'eux disposé entre une paire différente de secondes entretoises (120), les premiers éléments de fixation (130) étant disposés de manière perpendiculaire l'un par rapport à l'autre et dans de différentes positions le long de la longueur de la première entretoise (110).

8. La structure selon l'une quelconque des revendications 1 - 7, dans laquelle les tenons d'ancrage (121) sont en forme de T, et la première encoche (112) de la première entretoise (110) comprend une partie large (114) destinée à recevoir le tenon d'ancrage (121) et une partie étroite (113) où le tenon d'ancrage (121) est soutenu.

9. La structure selon l'une quelconque des revendications 1 - 8, dans laquelle la première entretoise (110) est un tube arrondi et chaque seconde entretoise (120) est un tube carré, et la partie d'extrémité (126) de chaque seconde entretoise (120) comprend un bord arrondi correspondant, au moins en partie, à la paroi latérale de la première entretoise (110).

10. La structure selon l'une quelconque des revendications précédentes, comprenant en outre :
une troisième entretoise (230) et une quatrième entretoise (240) ;
une partie d'extrémité (245) de la quatrième entretoise est supportée sur une paroi latérale (231) de la troisième entretoise, de façon que les entretoises troisième et quatrième (230, 240) sont dans une disposition en forme de T ;
la troisième entretoise (230) comprend un second trou (232) pour recevoir un second élément de fixation (250) et comprend en outre une seconde encoche (233) ;
la quatrième entretoise (240) comprend une aile (242) s'étendant dans une direction axiale à partir d'une paroi latérale (241) de la quatrième entretoise, dans laquelle l'aile comprend un troisième trou (243) et une languette (244) destinée à être introduite dans la seconde encoche (233) ;
dans laquelle le troisième trou (243) est aligné avec le second trou (232) afin de recevoir le second élément de fixation (250), et la languette (244) fait saillie par rapport à l'aile (242) en direction perpendiculaire à la direction axiale.

11. La structure selon l'une quelconque des revendications précédentes, comprenant en outre :
une cinquième entretoise (350) et une sixième entretoise (360) ;
la sixième entretoise (360) comprend une partie d'extrémité en forme de U destinée à recevoir la cinquième entretoise (350) de manière à former une jonction en T.

12. La structure selon l'une quelconque des revendications précédentes, comprenant en outre :
une septième entretoise (470) et une huitième entretoise (480) ;
la septième entretoise (470) étant un support de bobine de filasse,
dans laquelle la huitième entretoise (480) comprend une ouverture (484) dans une paroi latérale (487) destinée à recevoir la septième entretoise (470) de manière à former une jonction en T ;
la septième entretoise (470) comprend une première ouverture rainurée (471) destinée à recevoir un quatrième élément de fixation (410) pendant que le quatrième élément de fixation (410) passe à travers deux parois latérales opposées (488) de la huitième entretoise ;
l'ouverture (484) comprend une paire de rainures (485) disposées dans la direction longitudinale de façon que deux parois latérales opposées (488) de la huitième entretoise tiennent la septième entretoise lorsque le quatrième élément de fixation est assujetti.

13. La structure selon l'une quelconque des revendications précédentes, comprenant en outre :
une neuvième entretoise (590) comprenant une partie de clapet (593) s'étendant à partir d'une paroi latérale (592) de la neuvième entretoise,
dans laquelle la paroi latérale de la neuvième entretoise (591) opposée à la paroi latérale (592) de la partie de clapet (593) comprend un enfoncement (595) destiné à recevoir, au moins en partie, la partie de clapet (593) dans une condition repliée et un élément d'arrêt (596) pour maintenir la partie de clapet (593) en position ;
dans laquelle la partie de clapet (593) supporte un tendeur de filasse lorsque la partie de clapet (593) est repliée sur l'enfoncement (595).

14. Un cantre pour supporter des bobines de filasse comprenant une structure de châssis, dans lequel la structure de châssis est une structure selon l'une quelconque des revendications 1 - 13.
